# EUROPEAN PATENT APPLICATION

(11) **EP 3 865 314 A1**
(43) Date of publication of application: **18.08.2021**
(21) Application number: 21152573.8
(22) Date of filing: 20.01.2021
(51) Int. Cl.: B60C 7/14, B60C 9/18

(54) **NON-PNEUMATIC TIRE INCLUDING REINFORCING STRUCTURE PART**

(30) Priority: 17.02.2020 KR 20200019144
(71) Applicant: HANKOOK TIRE & TECHNOLOGY CO., LTD, Gyeonggi-do 13494 (KR)
(72) Inventor: KIM, Sung Tae, 34127 Daejeon (KR); CHOI, Seok Ju, 34111 Daejeon (KR); KIM, Jeong Heon, 34090 Daejeon (KR)
(74) Representative: Pfenning, Meinig & Partner mbB

(57) **Abstract**

According to the invention, there is provided a non-pneumatic tire including: a tread part (110) having an outer circumferential surface at which a bent pattern is formed; at least one reinforcing structure part (120) that is positioned between the outer circumferential surface of the tread part and an inner circumferential surface of the tread part so as to be inserted inside the tread part; a spoke part (130) that is formed radially around a center of the tread part and is coupled to an inner surface of the tread part; and a rim part (140) that has a diameter smaller than a diameter of an inner circumferential surface of the spoke part and has an outer circumferential surface which is coupled to the spoke part. The reinforcing structure part has a plain weave shape surrounded by an elastomer and is wound in a circumferential direction of the tread part.

## Description

### BACKGROUND OF THE INVENTION

### Field of the Invention

The present invention relates to a non-pneumatic tire including a reinforcing structure part, and more specifically, a non-pneumatic tire including a reinforcing structure part which supports a load and improves fatigue resistance of a spoke part by applying a weave-shaped reinforcing structure part which is inserted inside a tread part in a circumferential direction of the tread part.

### Description of the Related Art

Tires which are widely used currently can be classified into a radial tire, a bias tire, and a solid tire depending on a structure thereof. Of the tires, the radial tire, that is, a pneumatic-pressure (or pneumatic) tire, is mostly used for a car and an automobile except for a special purpose automobile. However, the pneumatic-pressure tire has a complicated structure and a large number of manufacturing processes as eight steps in which a nonnegligible amount of harmful substance is emitted. In addition, the pneumatic-pressure tire is not free of both inconvenience of maintenance due to frequent checks of pneumatic pressure that is absolutely essential for performance and safety of the pneumatic-pressure tire and a safety problem in that the tire can be damaged during running due to piercing and impact by an external object.

However, unlike the pneumatic-pressure tire, a non-pneumatic tire is a tire that is manufactured in a process and a structure based on a new concept in which it is not only possible to significantly reduce manufacturing costs by simplifying materials and processes but also possible to remarkably reduce energy consumption and generation of harmful substances, and the non-pneumatic tire is more advantageous to avoid a problem due to a lack of pneumatic pressure or the like. In addition, the non-pneumatic tire is advantageous to prevent a standing wave pattern generated in a pneumatic-pressure tire and to significantly improve rolling resistance.

Since the non-pneumatic tire is configured of a structure completely different from a structure of a pneumatic-pressure tire in the related art and is designed in a method in which compressed air is not used at all unlike a pneumatic pressure method, the non-pneumatic tire is free from a risk of accident that may occur due to a loss or lack of pneumatic pressure (flat tire) during running.

A non-pneumatic tire has also been used in the related art. In addition to wagon wheels and bicycle wheels used a long time ago, for recent examples, Korean Patent Application No. 2006-0051513 discloses a technique in which a load of a tire is supported by multiple supporting members including multi-ply staples, and Korean Patent Application No. 2008-0038274 discloses a technique in which a configuration includes a main body manufactured of an elastic material, an extended crown portion in a circumferential direction which functions as a tread, and an extended side wall which is joined to the extended crown portion. In addition, Korean Patent Application No. 2004-0027984 discloses a non-pneumatic tire including a reinforced annual band that supports a load of the tire and multiple web spokes that are tensioned to transmit a load force between a wheel and a hub. Recently, there was disclosed a technique of an airless tire (Korean Patent Application No. 10-2010-0090015) including a buffer unit having a honeycomb shape by which a buffering action is performed and which receives pressure applied to the tire.

On the other hand, a non-pneumatic tire including multiple web spokes is introduced to support a load through a tensile force of the web spokes. In that case, a structural reinforcing member is provided between the web spokes and a tread that comes into contact with the ground, so as to support a load of a vehicle, and fulfills a function of pneumatic pressure in a pneumatic-pressure tire. For example, a structurally supported, non-pneumatic wheel (US 9272576 B2) including a continuous loop reinforcement assembly includes a structural reinforcing member having a helically wounded coil shape, and metal, steel, carbon fibers, aramid fibers, and glass fibers are described as materials of the structural reinforcing member.

On the other hand, JP 4855646 B2 discloses a non-pneumatic tire including an elastomer shear layer and ring-shaped reinforcement bands at inner and outer sides in a radial direction of the elastomer shear layer, and the ring-shaped reinforcement band has an angle of 10 to 45 degrees, and fiber-reinforced material is described as a material of the ring-shaped reinforcement band.

Besides, JP 4530231 B2 discloses a non-pneumatic tire including an intermediate annual part (inner annual part) and an outer annual part reinforced in a circumferential direction of the tire, in which examples of reinforcement materials include a fiber reinforcement material (reinforcement fibers such as long fibers, short fibers, woven fabric, non-woven fabric, particulate fillers (for example, rayon cords, polyamide cords such as nylon 6.6, polyester cords, aramid cords, glass fibers, or carbon fibers)), metal (steel cords), and the like, and the outer annual part can be formed with ply of steel cords, aramid cords, rayon cords, or the like intersecting each other in an opposite direction which are arranged in parallel at an inclined angle of about 20 degrees.

As described above, as a tire-related technique is developed, research and development of various tires has been performed in order to safely protect a driver, and mass production of better non-pneumatic tires needs to be achieved through the research and development thereof without interruption in future.

### Citation List

### Patent Literature

Patent Literature 1: Korean Patent Registration No. 10-0810935(February 29, 2008)
Patent Literature 1: Korean Patent Registration No. 10-1043001(June 14, 2011)

### SUMMARY OF THE INVENTION

An object of the invention to solve such a problem described above is to provide a non-pneumatic tire including a reinforcing structure part which not only sufficiently supports a load of a vehicle with structural rigidity obtained by applying a weave-shaped reinforcing structure to the non-pneumatic tire but also improves fatigue resistance of a spoke structure, vibration distribution, and twisting torque during a direction change of a vehicle by improving a stress distribution through a load distribution between a spoke part and a non-spoke part.

Technical objects to be achieved by the invention are not limited to the technical objects mentioned above, and the following description enables other unmentioned technical objects to be clearly understood by a person of ordinary skill in the art to which the invention belongs.

According to a configuration of the invention to achieve the objects described above, there is provided a non-pneumatic tire including: a tread part having an outer circumferential surface at which a bent pattern is formed; at least one reinforcing structure part that is positioned between the outer circumferential surface of the tread part and an inner circumferential surface of the tread part so as to be inserted inside the tread part; a spoke part that is formed radially around a center of the tread part and is coupled to an inner surface of the tread part; and a rim part that has a diameter smaller than a diameter of an inner circumferential surface of the spoke part and has an outer circumferential surface which is coupled to the spoke part. The reinforcing structure part has a plain weave shape surrounded by an elastomer and is wound in a circumferential direction of the tread part.

According to an embodiment of the invention, the reinforcing structure part may include: at least one first cord which is arranged in the circumferential direction of the tread part and is separated from each other by a predetermined distance; at least one second cord which is arranged in a perpendicular direction to the first cord and is separated from each other by a predetermined distance; and an elastomer layer which is formed to surround the at least one first cord and the at least one second cord and is inserted inside the tread part. The first cord and the second cord may have a ribbon shape. The at least one first cord and the at least one second cord may intersect each other such that a cord sheet is formed in the plain weave shape.

According to the embodiment of the invention, the at least one reinforcing structure part may be formed and may be wound in the circumferential direction of the tread part.

According to the embodiment of the invention, the reinforcing structure part may be one, and the reinforcing structure part may be formed to have a width equal to or wider than 50% of a width of the tread part.

According to the embodiment of the invention, an inner circumferential surface of the reinforcing structure part may be positioned at a height equal to or lower than 20% of a height of the tread part, the height being a distance between the inner circumferential surface of the tread part and the outer circumferential surface of the tread part.

According to the embodiment of the invention, the elastomer layer may be formed to have a thickness of 0.5 mm to 10 mm.

According to the embodiment of the invention, adjacent first cords of the at least one first cord may be separated by at least 0.15 mm or more.

According to the embodiment of the invention, adjacent first cords of the at least one first cord may be separated by an interval shorter than an interval between adjacent second cords of the at least one second cord.

According to the embodiment of the invention, the first cord and the second cord may have the same material, size, thickness, and linear density.

According to the embodiment of the invention, the first cord and the second cord may be made of any one material of polyamide-based fibers, polyester-based fibers, rayon fibers, aramid fibers, glass fibers, carbon fibers, and steel cords.

According to the embodiment of the invention, the first cord and the second cord may have the same material, size, and thickness, and the second cord may have linear density lower than linear density of the first cord.

According to the embodiment of the invention, the reinforcing structure part may have an overlap portion at which one side portion of the reinforcing structure part is overlapped to cover at least a part of the other side portion of the reinforcing structure part.

According to the embodiment of the invention, the overlap portion may be formed to have a length of 50 mm or shorter in the circumferential direction.

According to the embodiment of the invention, the overlap portion may be formed to be parallel with a central axis of the tread part.

According to the embodiment of the invention, the overlap portion may be inclined at an inclination of 20° to 70° with respect to a perpendicular line perpendicular to the central axis of the tread part.

### BRIEF DESCRIPTION OF THE DRAWINGS

FIG. 1 is a partial perspective view illustrating a non-pneumatic tire including a reinforcing structure part according to a first embodiment of the invention;
FIG. 2 is a cross-sectional view in a direction along a central axis of a tread part of the non-pneumatic tire including the reinforcing structure part according to the first embodiment of the invention;
FIGS. 3A and 3B are perspective views in one direction illustrating an overlap portion formed in the reinforcing structure part of the non-pneumatic tire including the reinforcing structure part according to the first embodiment of the invention;
FIG. 4 is a plan view illustrating a cord sheet formed by a combination of first cords and second cords of the non-pneumatic tire including the reinforcing structure part according to the first embodiment of the invention;
FIG. 5 is a plan view illustrating a modified cord sheet of FIG. 4;
FIG. 6 is a side view in one direction illustrating a non-pneumatic tire including a reinforcing structure part according to a second embodiment of the invention;
FIG. 7 is a view illustrating results of static characteristic analysis of the non-pneumatic tires according to the first and second embodiments of the invention; and
FIG. 8 is a view illustrating results of static characteristic analysis of pneumatic-pressure tires to which a reinforcing structure part is not applied.

### DETAILED DESCRIPTION OF THE PREFERRED EMBODIMENTS

Hereinafter, the invention will be described with reference to the accompanying drawings. However, the invention can be realized as various different examples and, thus, is not limited to embodiments described herein. Besides, a part irrelevant to the description is omitted from the drawings in order to clearly describe the invention, and similar reference signs are assigned to similar parts through the entire specification.

In the entire specification, a case where a certain part is "connected to (attached to, in contact with, or coupled to)" another part means not only a case where the parts are "directly connected" to each other, but also a case where the parts are "indirectly connected" to each other with another member interposed therebetween. In addition, a case where a certain part "comprises" a certain configurational element does not mean that another configurational element is excluded but means that another configurational element can be further included, unless specifically described otherwise.

Terms used in this specification are only used to describe a specific embodiment and are not intentionally used to limit the invention thereto. A singular form of a word also includes a plural meaning of the word, unless obviously implied otherwise in context. In this specification, words such as "to comprise" or "to have" are understood to specify that a feature, a number, a step, an operation, a configurational element, a member, or an assembly thereof described in the specification is present and not to exclude presence or a possibility of addition of one or more other features, numbers, steps, operations, configurational elements, members, or assemblies thereof in advance.

Hereinafter, embodiments of the invention will be described in detail with reference to the accompanying drawings.

### 1. First Embodiment

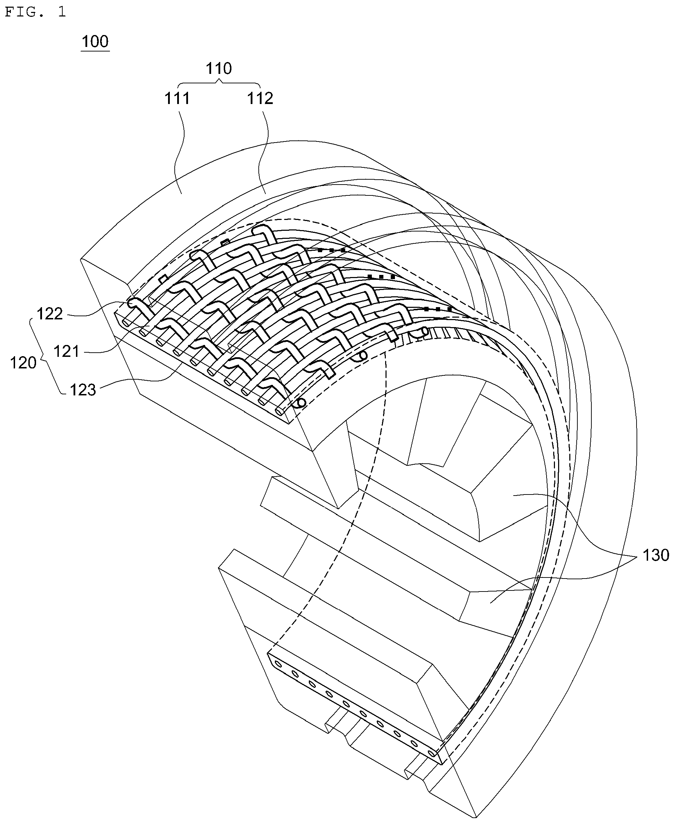

FIG. 1 is a partial perspective view illustrating a non-pneumatic tire including a reinforcing structure part according to a first embodiment of the invention.

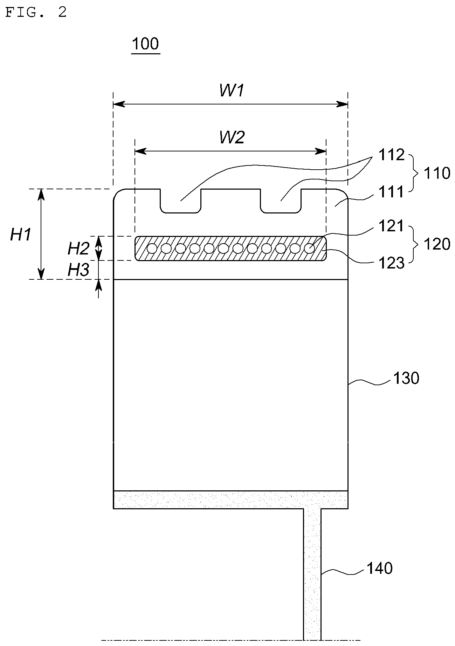

FIG. 2 is a cross-sectional view in a direction along a central axis of a tread part of the non-pneumatic tire including the reinforcing structure part according to the first embodiment of the invention.

A non-pneumatic tire 100 according to the first embodiment of the invention includes a tread part 110, a reinforcing structure part 120, a spoke part 130, and a rim part 140.

The tread part 110 is a general-purpose tread widely used for a tire and has an outer circumferential surface at which multiple bent patterns are formed. The tread part 110 includes a tread 111 and a tread groove 112.

The tread 111 is a part of general-purpose configurational elements of a tire as described above and has an outer circumferential surface, which comes into contact with the ground, formed into a bent pattern. The above-described structure increases a frictional force through contact with the ground and prevents a vehicle from slipping, and the specific description thereof is omitted.

The tread groove 112 is formed to be dented toward the central axis of the tread 111 from the outer circumferential surface of the tread 111. In addition, the tread groove 112 is generally formed to be dented along a circumference of the tread 111, but is not limited thereto.

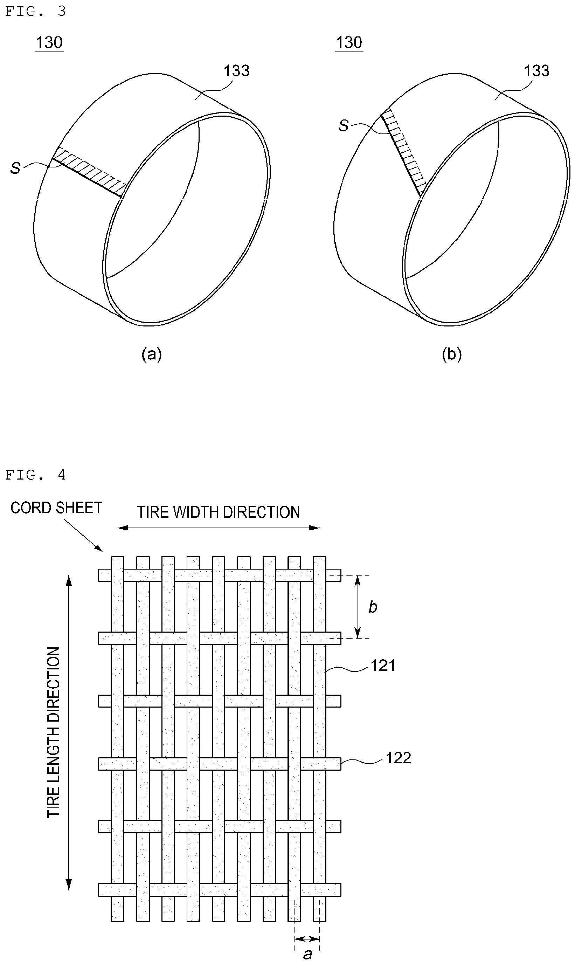

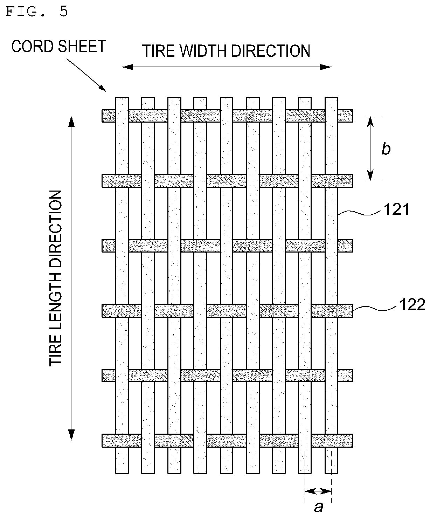

FIGS. 3A and 3B are perspective views in one direction illustrating an overlap portion formed in the reinforcing structure part of the non-pneumatic tire including the reinforcing structure part according to the first embodiment of the invention. FIG. 4 is a plan view illustrating a cord sheet formed by a combination of first cords and second cords of the non-pneumatic tire including the reinforcing structure part according to the first embodiment of the invention. FIG. 5 is a plan view illustrating a modified cord sheet of FIG. 4.

With reference to FIG. 2, the reinforcing structure part 120 is positioned between the outer circumferential surface of the tread part 110 and an inner circumferential surface of the tread part 110 so as to be inserted inside the tread part 110.

In the structure, the reinforcing structure part 120 is configured of a cord sheet having a plain weave shape surrounded by an elastomer and is wound in a circumferential direction of the tread part 110.

In addition, with reference to FIG. 2, an inner circumferential surface of the reinforcing structure part 120 is positioned at a height H3 equal to or lower than 20% of a height H1 of the tread part 110, the height H1 being a distance between the inner circumferential surface of the tread part 110 and the outer circumferential surface of the tread part 110.

When the reinforcing structure part 120 is positioned at a height higher than 20% of the height H1 of the tread part 110, a reinforcement effect of the reinforcing structure part 120 is reduced due to supporting of a spoke load and a stress distribution.

Hence, in the invention, it is preferable that the inner circumferential surface of the reinforcing structure part 120 be positioned at the height H3 equal to or lower than 20% of the height H1 of the tread part 1110.

Additionally, the reinforcing structure part 120 is formed to have a width equal to or wider than 50% of a width of the tread part 110.

When the reinforcing structure part 120 is formed to have a width narrower than 50% of the width of the tread part 110, the reinforcing structure part 120 is not effective for reinforcement due to supporting of a spoke load and a stress distribution.

Hence, in the invention, it is preferable that the reinforcing structure part is formed to have a width equal to or wider than 50% of the width of the tread part 110.

In addition, the reinforcing structure part 120 is formed at least one and is wound in the circumferential direction of the tread part 110. Specifically, one to three reinforcing structure parts 120 can be formed. With reference to FIGS. 3A and 3B, the reinforcing structure part 120 has an overlap portion S at which one side portion of the reinforcing structure part 120 is overlapped to cover at least a part of the other side portion of the reinforcing structure part.

Here, it is preferable that the overlap portion S be formed to have a length of 50 mm or shorter in the circumferential direction. When the overlap portion S is overlapped to have a length of 50 mm or longer in the circumferential direction, the length is disadvantageous to uniformity of a tire.

With reference to FIG. 3A, the overlap portion S is formed to be parallel to the central axis of the tread part 110.

With reference to FIG. 3B, the overlap portion S can be inclined at an inclination of 20° to 70° with respect to a perpendicular line perpendicular to the central axis of the tread part 110.

As described above, the overlap part S in the invention can be formed to have shapes different from each other as illustrated in FIGS. 3A and 3B.

The reinforcing structure part 120 includes first cords 121, second cords 122, and an elastomer layer 123.

With reference to FIGS. 1 and 4, the first cords 121 are arranged in a circumferential direction (tire length direction in FIGS. 4 and 5) of the tread part 110 and are separated from each other by a predetermined distance. Specifically, with reference to FIG. 4, the first cord 121 is formed at least one.

Specifically, adjacent first cords 121 of the at least one first cord 121 are separated by an interval a shorter than an interval b between adjacent second cords 122 of the at least one second cord 122. In particular, it is preferable that the interval a between the adjacent first cords 121 be 0.15 mm or more. When the interval a between the adjacent first cords 121 is less than 0.15 mm, the reinforcing structure part 120 having the interval a between the adjacent first cords 121 has shortcomings in that durability is lower than that of the reinforcing structure part 120 having the interval a of 0.15 mm or more between the adjacent first cords 121.

The second cords 122 are arranged in a perpendicular direction (tire width direction in FIGS. 4 and 5) to the first cords 121 and are separated from each other by a predetermined distance, and, as illustrated in FIG. 4, the second cord is formed at least one.

In addition, the adjacent second cords 122 of the at least one second cord 122 are separated by an interval longer than the interval between the adjacent first cords 121 of the at least one first cord 121.

Specifically, as the interval b between the adjacent second cords 122 is less than the interval a between the adjacent first cords 121, not only a space (area of a × b) between the first cords 121 and the second cords 122 is not sufficient, but also the reinforcing structure part is disadvantageous in durability in that the number of contact points of the first cords 121 and the second cords 122 per unit area is increased, and the reinforcing structure part is not effective for reinforcement in a tire circumferential direction.

The first cord 121 and the second cord 122 can be made of any one material of polyamide-based fibers, polyester-based fibers, rayon fibers, aramid fibers, glass fibers, carbon fibers, and steel cords.

In addition, as illustrated in FIGS. 4 and 5, the first cord 121 and the second cord 122 have a ribbon shape, and the at least one first cord 121 and the at least one second cord 122 intersect each other such that a cord sheet is formed into the plain weave shape.

FIG. 4 illustrates the first cords 121 and the second cords 122 according to the first embodiment of the invention. The first cord 121 and the second cord 122 illustrated in FIG. 4 have the same material, size, thickness, and linear density.

On the other hand, FIG. 5 illustrates the reinforcing structure part 120 having a cord sheet in which the second cord 122 is modified. The first cord 121 and the second cord 122 illustrated in FIG. 5 have the same material, size, and thickness, and there is a difference in that the second cord 122 has linear density lower than that of the first cord 121.

An elastomer layer 123 is formed to surround the at least one first cord 121 and the at least one second cord 122 and is inserted inside the tread part 110.

Here, it is preferable that the elastomer layer 123 be formed to have a thickness of 0.5 mm to 10 mm.

The spoke part 130 is formed radially around a center of the tread part 110 and is coupled to an inner surface of the tread part. A shape of the spoke part 130 in the invention is illustrated and described as an example, and another shape of the spoke part can also be applied.

The above-described spoke part 130, as illustrated in FIG.2, connects the tread part 110 and rim part 140 to support a load transmitted from the tread part 110 and transmits the load to the rim part 140.

The spoke part 130 corresponds to that in the related art, and thus the specific description thereof is omitted.

The rim part 140 has a diameter smaller than that of an inner circumferential surface of the spoke part 130 and has an outer circumferential surface which is coupled to the spoke part 130. Consequently, the rim part 140 is positioned at the innermost side and supports a load transmitted from the tread part 110 and the spoke part 130.

### 2. Second Embodiment

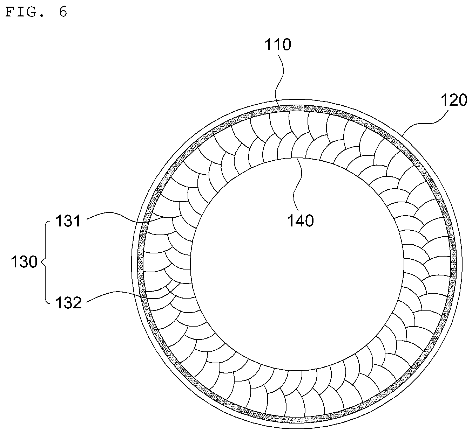

Hereinafter, with reference to FIGS. 6 to 8, a non-pneumatic tire including a reinforcing structure part according to a second embodiment of the invention will be described, and the following description will focus on configurational elements different from the configurational elements in the first embodiment.

FIG. 6 is a side view in one direction illustrating the non-pneumatic tire including the reinforcing structure part according to the second embodiment of the invention.

The non-pneumatic tire 100 including the reinforcing structure part according to the second embodiment of the invention differs from the first embodiment in that the reinforcing structure part 120 of the first embodiment is provided at a different position and that a sub-configurational element of the spoke part 130 is further provided, and the other configurational elements of the second embodiment are the same as the configurational elements of the first embodiment.

The reinforcing structure part 120 is coupled to the inner circumferential surface of the tread part 110.

The spoke part 130 is coupled to the inner circumferential surface of the reinforcing structure part 120, and the spoke part 130 includes an upper spoke 131 and a lower spoke 132.

The upper spoke 131 is coupled to the inner circumferential surface of the reinforcing structure part 120. In addition, the upper spoke 131 can be formed radially toward the center of the tread part 110. Additionally, multiple upper spokes 131 are formed to be separated from each other by a predetermined distance.

One end of the lower spoke 132 is coupled to the upper spoke 131, and the other end thereof is coupled to the rim part 140. In addition, the lower spoke 132 can be formed radially toward the center of the tread part 110. Additionally, multiple lower spokes 132 are formed to be separated from each other by a predetermined distance. Consequently, the lower spoke 132 connects the upper spoke 131 and the rim part 140 and supports a load.

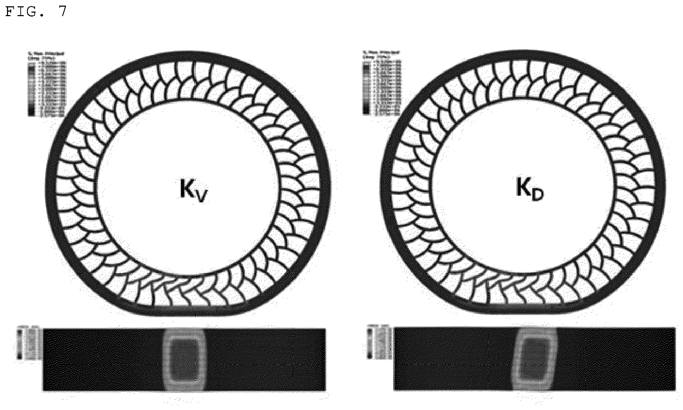

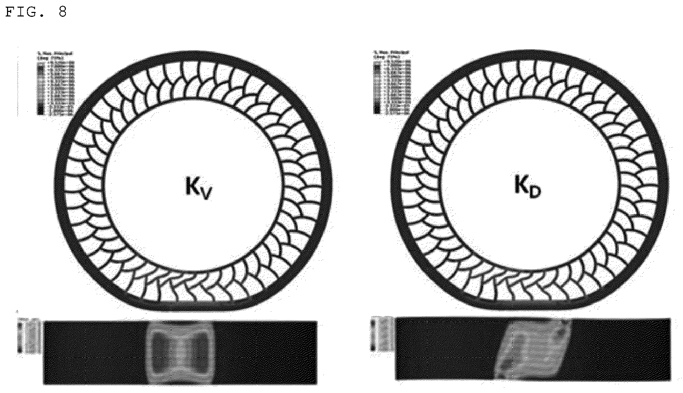

FIG. 7 is a view illustrating results of static characteristic analysis of the non-pneumatic tires according to the first and second embodiments of the invention. FIG. 8 is a view illustrating results of static characteristic analysis of pneumatic-pressure tires to which a reinforcing structure part is not applied.

FIG. 7 illustrates results of static characteristic analysis of a degree of deformation as one of static characteristic performance evaluation of the non-pneumatic tires 100 including the reinforcing structure part according to the first and second embodiments of the invention, and FIG. 8 illustrates results of static characteristic analysis of a general pneumatic-pressure tire to which a reinforcing structure part is not applied.

As illustrated in FIGS. 7 and 8, a degree of deformation during twisting by applying the reinforcing structure part 120 is found to have a grounding shape similar to that of the pneumatic-pressure tire.

**Table 1**

| Classification (Index) | Embodiments with or without application of reinforcing structure part in non-pneumatic tire | | | |
|---|---|---|---|---|
| | Comparative Example 1 | Comparative Example 2 | Embodiment 1 | Embodiment 2 |
| Shape of reinforcing structure part | Without application | Cord positioned only in circumferential direction | Same longitudinal fiber - latitude fiber cord-applied sheet | Different longitudinal fiber - latitude fiber cord-applied sheet |
| Material of reinforcing structure part (longitudinal fiber - tire circumferential direction) | - | PET 1000D/2 | PET 1000D/2 | PET 1000D/2 |
| Cord interval (longitudinal fiber) | - | 25.4EPI | 25.4EPI | 25.4EPI |
| Material of reinforcing structure part (latitudinal fiber - tire width direction) | - | - | PET 1300D/2 | PET 1300D/2 |
| Cord interval (latitudinal fiber) | 100 | 80 | 78 | 79 |
| Degree of spoke deformation (Index) | 100 | 70 | 70 | 70 |
| Vertical static characteristics (Kv, Index) | 100 | 150 | 153 | 151 |
| Twisting static characteristics (Kd, Index) | 100 | 130 | 170 | 135 |
| Rolling resistance (RRc, Index) | 100 | 110 | 104 | 109 |
| Brake performance (Index) | 100 | 80 | 88 | 82 |

With reference to FIGS. 7 and 8 and Table 1, the non-pneumatic tire 100, to which the reinforcing structure part 120 according to the second embodiment of the invention is applied, is confirmed to improve static characteristic performance compared to a comparative example and is confirmed to slightly improve brake performance compared to a reinforcing member positioned on in the circumferential direction.

According to the configurations described above, it is not only possible to sufficiently support a load of a vehicle with structural rigidity obtained by applying a weave-shaped reinforcing structure to the non-pneumatic tire, but also possible to improve fatigue resistance of a spoke structure, vibration distribution, and twisting torque during a direction change of the vehicle by improving a stress distribution through a load distribution between a spoke part and a non-spoke part.

Effects of the invention are construed not to be limited to the above-mentioned effects but to include every effect that can be derived from configurations of the invention described in the detailed description of the preferred embodiments and claims of the invention.

The description of the invention described above is provided as an example, and a person of ordinary skill in the art to which the invention belongs can understand that it is possible to easily modify the invention to another embodiment without changing the technical idea or essential feature of the invention. Therefore, the embodiments described above are provided to be understood as exemplified examples in every aspect and not as examples limiting the invention. For example, the configurational elements described in singular forms can be realized in a distributed manner. Similarly, the configurational elements described in a distributed manner can be realized in a coupled manner.

The scope of the invention has to be represented by the claims to be described below, and meaning and the scope of the claims and every modification or modified embodiment derived from an equivalent concept of the claims have to be construed to be included in the scope of the invention.

## Claims

1. A non-pneumatic tire comprising:
a tread part having an outer circumferential surface at which a bent pattern is formed;
at least one reinforcing structure part that is positioned between the outer circumferential surface of the tread part and an inner circumferential surface of the tread part so as to be inserted inside the tread part;
a spoke part that is formed radially around a center of the tread part and is coupled to an inner surface of the tread part; and
a rim part that has a diameter smaller than a diameter of an inner circumferential surface of the spoke part and has an outer circumferential surface which is coupled to the spoke part,
wherein the reinforcing structure part has a plain weave shape surrounded by an elastomer and is wound in a circumferential direction of the tread part.

2. The non-pneumatic tire according to claim 1,
wherein the reinforcing structure part includes:
at least one first cord which is arranged in the circumferential direction of the tread part and is separated from each other by a predetermined distance;
at least one second cord which is arranged in a perpendicular direction to the first cord and is separated from each other by a predetermined distance; and
an elastomer layer which is formed to surround the at least one first cord and the at least one second cord and is inserted inside the tread part,
wherein the first cord and the second cord have a ribbon shape, and
wherein the at least one first cord and the at least one second cord intersect each other such that a cord sheet is formed into the plain weave shape.

3. The non-pneumatic tire according to claim 2,
wherein the at least one reinforcing structure part is formed and is wound in the circumferential direction of the tread part.

4. The non-pneumatic tire according to claim 3,
wherein the reinforcing structure part is formed one, and
wherein the reinforcing structure part is formed to have a width equal to or wider than 50% of a width of the tread part.

5. The non-pneumatic tire according to claim 4,
wherein an inner circumferential surface of the reinforcing structure part is positioned at a height equal to or lower than 20% of a height of the tread part, the height being a distance between the inner circumferential surface of the tread part and the outer circumferential surface of the tread part.

6. The non-pneumatic tire according to claim 4,
wherein the elastomer layer is formed to have a thickness of 0.5 mm to 10 mm.

7. The non-pneumatic tire according to claim 4,
wherein adjacent first cords of the at least one first cord are separated by at least 0.15 mm or more.

8. The non-pneumatic tire according to claim 7,
wherein adjacent first cords of the at least one first cord are separated by an interval shorter than an interval between adjacent second cords of the at least one second cord.

9. The non-pneumatic tire according to claim 2,
wherein the first cord and the second cord have the same material, size, thickness, and linear density.

10. The non-pneumatic tire according to claim 9,
wherein the first cord and the second cord are made of any one material of polyamide-based fibers, polyester-based fibers, rayon fibers, aramid fibers, glass fibers, carbon fibers, and steel cords.

11. The non-pneumatic tire according to claim 2,
wherein the first cord and the second cord have the same material, size, and thickness, and
wherein the second cord has linear density lower than linear density of the first cord.

12. The non-pneumatic tire according to claim 3,
wherein the reinforcing structure part has an overlap portion at which one side portion of the reinforcing structure part is overlapped to cover at least a part of the other side portion of the reinforcing structure part.

13. The non-pneumatic tire according to claim 12,
wherein the overlap portion is formed to have a length of 50 mm or shorter in the circumferential direction.

14. The non-pneumatic tire according to claim 12,
wherein the overlap portion is formed to be parallel with a central axis of the tread part.

15. The non-pneumatic tire according to claim 12,
wherein the overlap portion is inclined at an inclination of 20° to 70° with respect to a perpendicular line perpendicular to the central axis of the tread part.
